# EUROPÄISCHE PATENTSCHRIFT

(11) **EP 0 949 188 B1**
(45) Veröffentlichungstag und Bekanntmachung des Hinweises auf die Patenterteilung: **16.11.2005**
(21) Anmeldenummer: 99106716.6
(22) Anmeldetag: 01.04.1999
(51) Int. Cl.: B66F 9/075, B62D 33/06

(54) **Kabine für ein Flurförderzeug**
Cabin for a fork-lift truck
Cabine pour chariot élévateur

(30) Priorität: 03.04.1998 DE 19815126
(43) Veröffentlichungstag der Anmeldung: 13.10.1999
(73) Patentinhaber: STILL GMBH, D-22113 Hamburg (DE)
(72) Erfinder: Frisch, Bert, 21502 Geesthacht (DE)
(74) Vertreter: Kasseckert, Rainer

(56) Entgegenhaltungen:
- EP-A- 0 183 320
- EP-A- 0 400 203
- "Aus dem Tagebuch des Papamobils" DIALOG, [Online] Bd. 98, Nr. 06, Juni 1998 (1998-06), XP002259642 Gefunden im Internet: <URL:http://www.dialog.at/archiv/d0698/069 8dasLetzte.html> [gefunden am 2003-10-29]
- DAVID BRIGGD: "Castro May Free Political Prisoners" CUBANET NEWS, [Online] 24. Januar 1998 (1998-01-24), XP002259621 Gefunden im Internet: <URL:http://64.21.33.164/CNews/y98/jan98/2 3e2.htm> [gefunden am 2003-10-29]
- SALAH MALKAWI/AFP: "The Pope Visits the Holy Land" TIME.COM, [Online] 20. März 2000 (2000-03-20), XP002259622 Gefunden im Internet: <URL:http://www.time.com/time/daily/specia l/photo/pope/3.html> [gefunden am 2003-10-29]

## Beschreibung

Die Erfindung betrifft eine Kabine eines Flurförderzeugs, insbesondere eines Gabelstaplers.

Auf dem Gebiet der Personenkraftwagen ist das sog. Papamobil bekannt (Aus dem Tagebuch des Papamobils "DIALOG, [Online] Bd. 98, Nr. 06, Juni 1998 (1998-06, XP002259642 Gefunden im Internet: <URL:http://www.dialog.at/archiv/d0698/069 8das Letzte.html> [gefunden am 2003-10-29]), ein Fahrzeug, welches den Papst vor Attentaten schützen soll. Bei diesem Fahrzeug bestehen das Dach und die Fenster aus Panzerglas.

Flurförderzeuge mit einem Fahrerarbeitsplatz weisen in der Regel ein Dach oder eine Kabine auf, die den Fahrer vor herabstürzenden Teilen der Last schützen. Bei der Dachgestaltung sind sowohl Gitterkonstruktionen als auch Blechkonstruktionen mit eingebautem Fenster bekannt. Beide Ausführungen stellen jeweils einen Kompromiß zwischen Schutz und freier Sicht nach oben oder schräg nach oben dar.

Aufgabe der Erfindung ist es daher, eine Kabine zu schaffen, die hohe Sicherheit mit verbessertem Sichtverhältnis vereinigt.

Diese Aufgabe wird erfindungsgemäß gelöst von einer Kabine für ein Flurförderzeug gemäß Anspruch 1. Mit der Erfindung wird erreicht, dass das Dach im Wesentlichen völlig durchsichtig ist und gleichzeitig dem Fahrer einen optimalen Schutz gegen herunterfallende Teile gibt. Das erfindungsgemäße Panzerglas bildet das Dach und die Frontscheibe oder die Heckscheibe. So können also zwei getrennte Glasscheiben vorgesehen sein, die den Fahrer nach vorne, nach oben und nach hinten schützen und dabei dem Fahrer einen guten Blick in die genannten Richtungen gewähren. Erfindungsgemäß ist die Glasscheibe einstückig gebaut und bildet z.B. Frontscheibe und Dach, oder ist in einer weiteren Ausführungsform von der Frontscheibe über das Dach durchgehend bis zur Heckscheibe ausgebildet. Die Sichtverhältnisse dieser Ausführung sind optimal; im Blickfeld des Fahrers bleibt dann lediglich noch der lediglich noch der umlaufende Metallrahmen, der die Glasscheibe einfaßt und den Rahmen für die Türen oder Seitenscheiben bildet.

In einer bevorzugten Ausführungsform kann die Kabinenform einer Eiform oder einer Kugelform angepaßt sein. Diese Form ist - wie aus der Form von Reaktorbehältern bekannt - von Natur aus eine der stabilsten Formgebungen. Sie erlaubt auch hier relativ dünne Wandstärken bei hoher Sicherheit, die durch die der Eiform innewohnende Stabilität gegeben ist.

Eine weitere Verbesserung der Sichtverhältnisse ergibt sich, wenn auch die Seitenteile, die die Türen oder die Fenster bilden, aus durchsichtigem Werkstoff, wie Glas oder Kunststoff gebildet sind. Dem Fahrer ist dann praktisch eine rundum freie Sicht möglich.

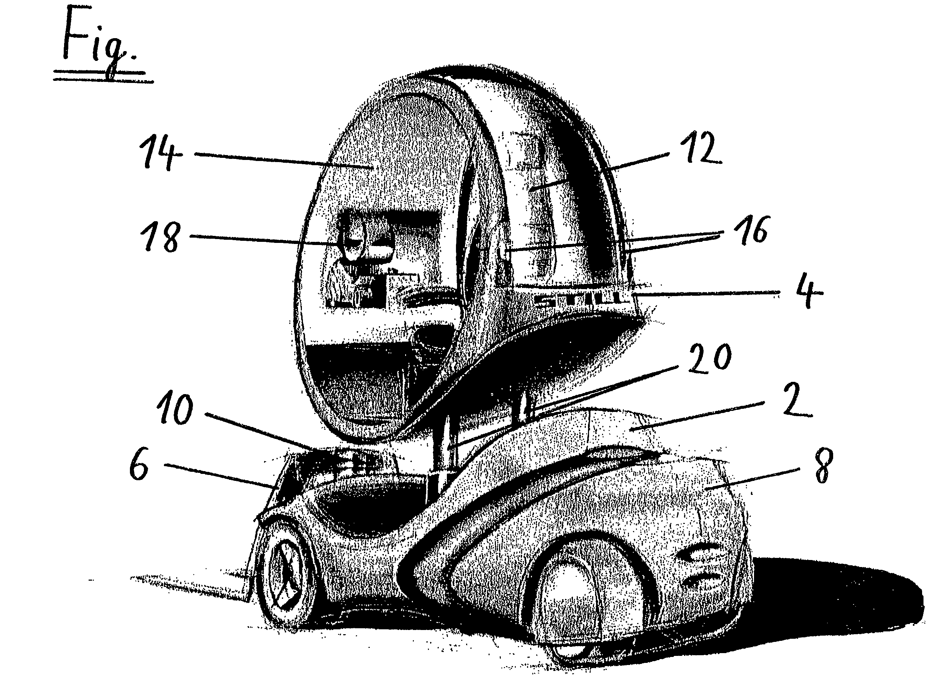

Weitere Vorteile, Merkmale und Ausgestaltungen der Erfindung ergeben sich nachfolgend aus einer Beschreibung einer Ausführung anhand der einzigen Zeichnung.

Die einzige Figur zeigt eine Ausführung eines erfindungsgemäßen Staplers mit dem Rahmen 2, der Kabine 4, dem Hubgerüst 6 und dem Gegengewicht 8. Das Hubgerüst 6 ist hier mit dem Teleskopzylinder 10 ausgerüstet. Innerhalb der Kabine 4 befindet sich der Fahrersitz 12, der, wie heute üblich, auf der linken Armlehne ein kleines Lenkrad enthält und auf der rechten Armlehne einen Joystick für die Staplerfunktionen und die Wahl der Fahrtrichtung. In dieser Ausführung hat die Kabine 4 eine Frontscheibe 14 und zwei Kameras 16, die nach hinten gerichtet sind und die dem Fahrer auf einem Bildschirm 18, der in der Frontscheibe 14 integriert werden kann, ein Bild von der Umgebung hinter dem Stapler projizieren kann. Die Kabine 4 ist in dieser Ausführung über zwei Hubzylinder 20 vom Rahmen 2 anhebbar.

Wie in der Figur gut zu erkennen ist, ist der Fahrersitz 12 von der im wesentlichen eiförmigen Kabine 4 umgeben. Die Frontscheibe 14 zieht sich in dieser Ausführung über das Dach hinweg bis hinter den Fahrersitz 12 und bildet so auch die Heckscheibe. Dem Fahrer steht so eine ungehinderte Sicht von vorne über das Dach bis nach hinten zur Verfügung. Da in dieser Ausführungsform die Seiten offen sind oder mit transparenten Seitenteilen (nicht gezeigt) als Türen verschlossen werden können, hat der Fahrer eine außergewöhnlich gute Sicht auf seine Umgebung, die nur durch die bogenförmigen Rahmen aus Metall, die die Panzerglasscheibe einfassen, begrenzt ist.

## Patentansprüche

1. Kabine für ein Flurförderzeug mit einem Dach und einer Frontscheibe (14) aus Panzerglas, **dadurch gekennzeichnet, dass** das Dach und die Frontscheibe (14) und/oder die Heckscheibe aus einem durchgängigen Stück Panzerglas bestehen.

2. Kabine nach Anspruch 1, **gekennzeichnet durch** eine Ei- oder Kugelform.

3. Kabine nach einem der vorhergehenden Ansprüche, **gekennzeichnet durch** Seitenteile aus einem transparenten Werkstoff wie Glas oder Kunststoff.

## Claims

1. Cab for an industrial truck having a roof and a front windscreen (14) made from reinforced glass, **characterized in that** the roof and the front windscreen (14) and/or the rear windscreen are made from a continuous piece of reinforced glass.

2. Cab according to Claim 1, **characterized by** an egg or ball shape.

3. Cab according to one of the preceding claims, **characterized by** side parts made from a transparent material such as glass or plastic.

## Revendications

1. Cabine pour un chariot élévateur comprenant un toit et une vitre avant (14) en verre blindé, **caractérisée en ce que** le toit et la vitre avant (14) et/ou la vitre arrière se composent de verre blindé d'une seule pièce continue.

2. Cabine selon la revendication 1, **caractérisée en ce qu'**elle présente une forme ovoïde ou sphérique.

3. Cabine selon l'une quelconque des revendications précédentes, **caractérisée par** des parties latérales en matériau transparent tel que du verre ou du plastique.
